# EUROPÄISCHE PATENTSCHRIFT

(11) **EP 0 758 992 B1**
(45) Veröffentlichungstag und Bekanntmachung des Hinweises auf die Patenterteilung: **29.10.1997**
(21) Anmeldenummer: 95916494.8
(22) Anmeldetag: 26.04.1995
(51) Int. Cl.: B65D 75/12, B65D 30/24, B29C 65/00

(54) **SACK AUS POLYMER-, INSBESONDERE POLYOLEFINGEWEBE UND VERFAHREN ZU SEINER HERSTELLUNG**
BAG MADE OF POLYMER AND ESPECIALLY POLYOLEFINE FABRIC AND PROCESS FOR PRODUCING IT
SAC EN TISSU DE POLYMERE, NOTAMMENT DE POLYOLEFINE, ET SON PROCEDE DE FABRICATION

(30) Priorität: 04.05.1994 AT 929/94
(43) Veröffentlichungstag der Anmeldung: 26.02.1997
(73) Patentinhaber: STARLINGER & CO. GESELLSCHAFT MBH, 1060 Wien (AT)
(72) Erfinder: STARLINGER HUEMER, Franz, A-1060 Wien (AT)
(74) Vertreter: Collin, Hans, Dipl.-Ing. Dr.
(86) Internationale Anmeldenummer: AT9500080
(87) Internationale Veröffentlichungsnummer: WO9530598

(56) Entgegenhaltungen:
- EP-A- 0 092 885
- DE-A- 3 236 770
- DE-A- 3 336 731
- GB-A- 892 630
- GB-A- 1 189 029

## Beschreibung

Die Erfindung betrifft einen Sack aus Gewebe aus monoaxial verstreckten, einschichtigen Polymer-, insbesondere Polyolefin-, vorzugsweise Polypropylenbändchen, das ein- oder zweiseitig mit thermoplastischem Kunststoff, insbesondere Polyolefin beschichtet sein kann, wobei das Gewebe ein schlauchartiges Rundgewebe oder ein zu einem Schlauch verbundenes Flachgewebe ist und mindestens ein Ende des Sackes durch Falten der Geweheenden zu einer, insbesondere rechteckigen, Bodenfläche ausgeformt ist, sowie ein Verfahren zur Herstellung eines solchen Sackes.

Zur Verpackung von Gütern, insbesondere Schüttgütern, werden verschiedene Arten von Säcken verwendet. Eine grobe Einteilung der Säcke wird durch die Unterscheidung in Kissen- und Kastenform getroffen. Eine Kissenform entsteht üblicherweise durch Konfektionierung der Böden mit Naht. Eine Kastenform entsteht durch eine Bodenfaltung und -verklebung. Es ist zu bemerken, daß eine Kastenform eine optimale Materialflächennützung, gutes Stapelvermögen, und wegen der Ziegelform verbesserte Volumennutzung ermöglicht. Daneben gibt es noch die Quasi-Kastenform, die an einer Seite dem Kissensack und an der anderen Seite dem Kastensack entspricht. Typische Säcke haben ein Fassungvermögen von 10, 25, 50, 100, 500 und 1000 kg. Als Herstellungsmaterialien kommen Naturfasergewebe wie Jute, Papier, Kunststoffolien und Kunststoffgewebe in Frage, wobei Naturfasergewebe-Säcke im Laufe der letzter; Jahrzehnte durch Papier- und Kunststoffolien- und die Kunststoffgewebesäcke ersetzt wurden, weil diese preisgünstiger sind und technische Vorteile zeigen.

Papier hat keine hohe Festigkeit, dadurch sind Säcke oft mit mehreren Papierschichten ausgestattet, was zu hohem Materialverbrauch führt. Ein Papiersack ist nicht wasserfest, teilweise nicht chemikalienbeständig. Andererseits läßt sich der Sack leicht in Kastenform mit billigen Klebemitteln herstellen.

Kunststoffolie hat ebenfalls keine hohe Festigkeit und benötigt deshalb große Materialdicke und ist außerdem nicht formstabil wegen hohem E-Modul und darüberhinaus hitzeempfindlich. Der Sack läßt sich relativ leicht zu Kissenform nahtverschweißen, aber schwer kleben, um einen Kastenformsack zu formen.

Kunststoffgewebe aus monoaxial verstreckten Bändchen weist die höchste Festigkeit auf und ist formstabil, besonders wenn es beschichtet ist. Im Vergleich zu Kunststoffolie ist der Materialverdrauch bei gleicher Tragfähigkeit wesentlich geringer. Säcke aus Kunststoffgewebe werden üblicherweise in Kissenform mit Nähten hergestellt.

Um einen gewebten Kastensack herzustellen, wird der gefaltete Boden nach dem Stand der Technik mit einem Mehrkomponentenkleber aufwendig verklebt, da Polypropylen- und Polyäthylen-Materialien, aus denen das Gewebe üblicherweise besteht, sich nur unter Schwierigkeiten verkleben lassen. Neben der umständlichen Verklebungsprozedur weisen die bekannten Kleber weitere Nachteile wie geringe Haltbarkeit, Sprödigkeit infolge von Temperaturwechsel und Verlust der Haftwirkung durch Feuchtigkeitseinflüsse auf. Außerdem ist die Chemikalienbeständigkeit dieser Kleber nicht zufriedenstellend, und das zu verklebende Material muß in der Pegel vor dem Kleben einer Oberflächenbehandlung, z.B. Coronabehandlung unterzogen werden. Unter Berücksichtigung der Tatsache, daß jährlich weltweit mehrere Milliarden an Säcken hergestellt werden und daß die nach dem Stand der Technik produzierten Säcke mit mehr oder weniger großen Nachteilen behaftet sind, ist offensichtlich, daß durch verbesserte Säcke oder deren Herstellungsverfahren enorme wirtschaftliche Vorteile erzielbar sind. Die vorliegende Erfindung hat sich zum Ziel gesetzt, einen Sack zu schaffen, der bei gleicher Tragfähigkeit gegenüber bisherigen Säcken die Stückkosten erheblich senkt und darüberhinaus weitere positive Eigenschaften aufweist.

Der erfindungsgemäße Sack besteht aus Gewebe aus monoaxial verstreckten Polyolefinbändchen. Diese Bändchen werden durch Streckung von Polyolefinfolien auf das 4 bis 10fache hergestellt, wodurch die Molekülketten in Bändchenlängsrichtung ausgerichtet werden und in diese Richtung ca. die 6 bis 10fache Festigkeit gegenüber der ursprünglichen Folie aufweisen. Die Bändchenbreite beträgt üblicherweise ca. 1,5-10 mm, die Dicke 20-80 µm. Bei Belastung in Querrichtung zerspleißen die Bändchen, weshalb sie in Rund- oder Flachgewebe aus zueinander etwa rechtwinkeligen Kette- und Schußlagen verwebt werden. Das Gewebe weist dann in alle Richtungen dieselbe hohe Zugfestigkeit auf. Zur Erzielung von Staub- und Feuchtigkeitsdichtheit und zur weiteren Unterbindung des Verrutschens von Bändchenlagen kann auf das Gewebe ein- oder zweiseitig eine Beschichtung aus Schmelze aus vorzugsweise demselben Material wie die Bändchen aufgetragen und eingepreßt werden. Der erfindungsgemäß Sack ist weiters als Kasten- oder Quasi-Kastensack ausgeführt, die vorteilhafter als Kissensäcke sind.

Aus der DE-A-3236770 ist ein Sack bekannt, bestehend aus einem Gewebe aus monoaxial verstreckten Polymerbändchen, wobei das Gewebe ein schlauchartiges Rundgewebe oder ein zu einem Schlauch verbundenes Flachgewebe ist und mindestens ein Ende des Sackes durch Falten der Gewebeenden zu einer Bodenfläche ausgeformt ist. Ziel der in diesem Dokument geoffenbarten Entwicklung ist es, den Sack so fortzubilden, daß er bei guter Siegel- und Verklebbarkeit ganz speziell auch zur Verpackung atmungsaktiver, vorzugsweise körniger Füllgüter geeignet ist. Dazu werden zunächst Bändchen aus Polypropylen zum Zeitpunkt ihrer Herstellung durch Koextrusion oder Laminierung mit beidseitig außen liegenden Siegelschichten aus einem Polymerwerkstoff versehen, danach gereckt und wärmebehandelt und schließlich zu einem atmungsaktiven Flächengebilde verarbeitet, aus dem Ventilsäcke konfektioniert werden. Gemäß der DE-A-3236770 soll eine Beschichtung des Gewebes selbst mit einer Siegelschicht vermieden werden, weil dadurch die Atmungsaktivität des Gewebes verloren ginge.

Der erfindungsgemäße Kasten- bzw. Quasi-Kastensack ist dadurch gekennzeichnet, daß mindestens ein Sackende, insbesondere eine Bodenfläche, über eine Zwischenschicht aus, insbesondere thermoplastischem, Kunststoff-, insbesondere Polyolefin-, vorzugsweise Polypropylenmaterial durch Wärmeeinwirkung mit einem Deckblatt aus Gewebe aus monoaxial verstreckten Polymer-, insbesondere Polyolefin-, vorzugsweise Polypropylenbändchen, verbunden ist und daß weniger als 30 % der Materialdicke der Gewebebändchen von Bodenfläche und Deckblatt infolge der Wärmeeinwirkung desorientierte Polymer-, insbesondere Polyolefin-, vorzugsweise Polypropylenmoleküle aufweisen, wobei im übrigen Materialbereich die Molekülorientierung vorhanden ist. Gegenüber bisher bekannten Säcken lassen sich folgende Vorteile anführen:
Höhere Festigkeit bei geringerem Materialverbrauch gegenüber Papier- oder Kunststoffoliensäcken,
hohe Festigkeit der Bodenverbindung,
keine durch Nahtperforierung des Gewebes verursachte Schwachstelle,
Wasserdichtheit und Chemikalienbeständigkeit,
niedrigste Stückkosten,
Haltbarkeit, da keine Alterung oder Versprödung der Schweißverbindung,
einfache Entsorgungsmöglichkeit, da der Sack ausschließlich aus sortenreinem Polyolefin besteht.

Da durch die Verschweißung in nur geringem Ausmaß die Ausrichtung der Molekülketten verloren geht, erleidet das Gewebe kaum Festigkeitseinbußen.

Spezielle Ausgestaltungen des erfindungsgemäßen Sackes sind dadurch gekennzeichnet, daß die zu einem Sackende, insbesondere einer Bodenfläche, gefalteten Gewebeteile einander nicht oder nicht wesentlich überlappen und ein gesondertes Deckblatt zur Bodenabdichtung vorgesehen ist oder dadurch gekennzeichnet, daß das Sackende, insbesondere die Bodenfläche, und das Deckblatt durch Überlappungen bei der Faltung des Sackgewebes gebildet sind. Durch die Auswahl einer dieser Ausgestaltungen kann auf die speziellen Gegebenheiten der Herstellungsmaschine Rücksicht genommen werden.

Besteht der Sack aus nicht beschichtetem Bändchengewebe, so ist zwischen Bodenfläche und Deckblatt eine Zwischenschicht aus Polyolefinschmelze als Schweißhilfsmittel vorgesehen, die allerdings auch bei beschichtetem Gewebe aufgetragen sein kann. Es ist jedoch zweckmäßig, daß bei ein- oder zweiseitig beschichtetem Bändchengewebe diese Beschichtung als Zwischenschicht zwischen Sackende bzw. Bodenfläche und Deckblatt dient.

In einer günstigen Ausgestaltung ist dem thermoplastischen Kunststoff von Bändchengewebebeschichtung und bzw. oder der Zwischenschicht ein Copolymer aus Ethylen und Vinylacetat beigemischt, wodurch einerseits der Schmelzpunkt der Beschichtung verringert und andererseits die Rutschfestigkeit der Beschichtung erhöht wird. Dies bewirkt eine leichtere Verschweißbarkeit und eine bessere Stapelbarkeit des erfindungsgemäßen Sackes.

Ein Problem bei Kastensäcken besteht darin, daß durch die Überlappung von schmalseitigen und längsseitigen Gewebelappen zur Bildung einer Endfläche Taschen an der Sackinnenseite ausgebildet werden, die einem Trichter vergleichbar sind, dessen Auslaßöffnung sich am Ende der Längsfaltungskante befindet. Dieses Problem tritt besonders bei Kastenventilsäcken auf, in die bei der Befüllung ein Stutzen eingeführt wird, durch den das Füllmaterial mittels Druckluft eingebracht wird. Durch das Einströmen der Druckluft blähen sich an der dem Ventil gegenüberliegenden Seite diese Taschen zu Trichtern auf und das meist pulvrige Material wird durch den "Trichterauslaß" aus dem Sack herausgepreßt. Aus fertigungstechnischen Gründen ist es nicht möglich, das Deckblatt exakt bis zur Faltungskante hin zu verschweißen, sodaß in der Faltungskante meist eine kleine Öffnung bleibt. Die vorliegende Erfindung bietet aber auch für dieses Problem der erfindungsgemäßen Säcke Lösungsmöglichkeiten an. Ein erster Ansatz ist dadurch gekennzeichnet, daß an zumindest einer Seite einer aus den Gewebelappen gebildeten Endfläche in einem Bereich nahe dem, insbesondere im, gemeinsamen Teil der Faltungskante zwischen einem längsseitigen und einem schmalseitigen Gewebelappen zumindest ein Klebepunkt bzw. eine Klebefläche aus einem Kaltkleber, Schmelzkleber oder einem thermoplastischen Kunststoff, insbesondere Polyolefin, mit niedrigerem Schmelzpunkt als das Material des Gewebes oder der Zwischenschicht vorgesehen ist. Beim Heißluftschweißvorgang der Sackendfläche wird das Klebematerial erweicht und fließt in die Faltungskante, wodurch nach dem Aushärten des Klebers die Öffnungen in der Faltungskante dicht verschlossen sind.

Ein weiterer Ansatz zur Verhinderung des Austretens von Füllmaterial aus Öffnungen in den Faltungskanten besteht darin, daß das Aufblähen der Taschen und damit die Trichterbildung verhindert oder zumindest erschwert wird. Dies kann erfindungsgemäß dadurch erreicht werden, daß an zumindest einer Seite einer aus den Gewebelappen gebildeten Endfläche zumindest einer der längsseitigen Gewebelappen in jenem Bereich, der im gefalteten Zustand einen schmalseitigen Gewebelappen überlappt, zumindest eine Öffnung aufweist. Durch diese Öffnung im nach dem Falten oberen Lappen wird beim darauffolgenden Aufschweißen des Deckblatts dieses durch die Öffnung hindurch mit dem unteren Lappen verschweißt und somit das Aufblähen der Tasche verhindert.

Eine andere zweckmäßige Ausgestaltung der Erfindung, mit der ebenfalls das Aufblähen der Taschen verhindert werden kann, ist dadurch gekennzeichnet, daß die eine Endfläche des Sackes bildenden längsseitigen und schmalseitigen Gewebelappen in den Bereichen, in denen sie einander überlappen, zumindest teilweise miteinander verschweißt sind. Diese Lösung ist durch den notwendigen zusätzlichen Vorgang des Einblasens von Heißluft jedoch fertigungstechnisch aufwendiger.

Wiederum eine andere Ausgestaltung der Erfindung ist dadurch gekennzeichnet, daß in den Bereichen der Endflächen, in denen die Taschen durch Faltung gebildet sind, alle übereinanderliegenden Gewebelagen durch einen Schweißpunkt oder eine Schweißfläche miteinander verbunden sind. Der im Schweißbereich auftretende Verlust der Orientierung der Molekülketten wirkt sich nicht auf die Gesamtfestigkeit aus, da mehrere übereinanderliegende Lagen des Gewebes miteinander verbunden sind.

Eine besonders vorteilhafte Ausgestaltung des erfindungsgemäßen Sackes ist dadurch gekennzeichnet, daß zwischen Sackende bzw. Bodenfläche und Deckblatt weiters mindestens ein Ventil vorgesehen ist, durch das der Sack befüllbar ist und das bei vollem Sack durch den Druck des Füllmaterials selbsttätig verschließbar ist. Dieser sogenannte Kastenventilsack ist besonders gut für Schnellfüllanlagen geeignet, da kein weiterer Arbeitsgang für das Verschließen des gefüllten Sackes erforderlich ist.

Um zu verhindern, daß beim Herausziehen des Füllstutzens aus dem Sack oder durch den beim Füllvorgang entstehenden erhöhten Druck im Sackinneren das Ventil teilweise umgestülpt wird, wodurch die Dichtwirkung verloren ginge, ist es zweckmäßig, daß in zumindest einem der an der Bildung einer Sackendfläche beteiligten längsseitigen Gewebelappen im Bereich zwischen der Innenkante des schmalseitigen Gewebelappens und der Innenkante des zwischen dem schmalseitigen und den längsseitigen Lappen angeordneten Ventils zumindest eine Öffnung angeordnet ist. Dadurch ist es möglich, die Oberseite des Ventils durch die Öffnungen hindurch mit dem Deckblatt zu verschweißen.

Bei Füllgut, das durch einen Luftstrom transportiert wird, wie z.B. Zement, kann es zweckmäßig sein, wenn das Bändchengewebe perforiert ist, damit nach der Füllung die eingeschlossene Luft entweichen kann.

Die Erfindung umfaßt auch ein Verfahren zur Aufschweißung eines Deckblattes auf eine End-, insbesondere Bodenfläche eines, insbesondere kasten- bzw. quaderförmigen Sackes, wobei das Deckblatt und das Sackmaterial aus Folien oder Geweben aus monoaxial verstreckten Polymer-, insbesondere Polyolefin-, vorzugsweise Polypropylenbändchen, insbesondere mit einer Dicke von 20-80 µm, vorzugsweise 30-50 µm, bestehen und die Gewebe wahlweise ein- oder zweiseitig mit einer Schmelze aus thermoplastischem Kunststoff-, insbesondere Polyolefinmaterial, insbesondere mit eine Dicke von 5-60 µm, beschichtet sind.

Dieses Verfahren ist gekennzeichnet durch das Einbringen einer Zwischenschicht aus Polymer-, insbesondere Polyolefin-, vorzugsweise Polypropylenschmelze, insbesondere mit einer Dicke von 5-60 µm, insbesondere mit einer Temperatur von 150-380°C, bevorzugt 230-260°C, zwischen End-, insbesondere Bodenfläche und Deckblatt, das darauffolgende Gegeneinanderpressen von End-, insbesondere Bodenfläche und Deckblatt und die Abkühlung von End- bzw. Bodenfläche, Zwischenschicht und Deckblatt auf Umgebungstemperatur.

Der Sack wird dadurch wesentlich günstige und einfacher in der Herstellung, da er teure Kleber und komplizierte Klebeverfahren vermeidet. Bei der Bodenverbindung durch Verschweißung wird die hohe Festigkeit des Gewebes kaum beeinträchtigt.

Eine Variante dieses Verfahrens ist dadurch gekennzeichnet, daß zur Aufschweißung eines Deckblattes auf zumindest eine End-, insbesondere Bodenfläche eines Sackes bei Verwendung eines zumindest einseitig beschichteten Gewebes für den Sack und bzw. oder das Deckblatt - anstelle der Einbringung einer thermoplastischen Kunststoff-, insbesondere Polyolefin-, vorzugsweise Polypropylenschmelze - die Erwärmung der Gewebebeschichtung, insbesondere durch Heißluft, bis zur Plastifizierung nur eines außen befindlichen Oberflächenbereiches, insbesondere bis in eine Eindringtiefe von 2-40 µm, insbesondere 3-10 µm, durchgeführt wird. Durch die direkte Erwärmung und Verbindung der Gewebebeschichtungen und Weglassen des Schritts des Extrudierens der Zwischenschicht kann das Verfahren sehr rationell gestaltet werden.

In Bezug auf eine wirtschaftliche Durchführung des Verfahrens ist es besonders vorteilhaft, wenn zur Aufschweißung eines Deckblattes auf eine End-, insbesonderes Bodenfläche eines Sackes die Abkühlung und das Gegeneinanderpressen von End- bzw. Bodenfläche und Deckblatt gleichzeitig durch zumindest ein gekühltes Druckelement, insbesondere Walzenpaar durchgeführt wird.

Die Aufbringung einer Zwischenschicht aus Kunststoff-, insbesondere Polyolefin-, vorzugsweise Polypropylenschmelze erfolgt zweckmäßig durch eine Breitschlitz- oder Fadenextrusionsdüse.

Eine Ausführungsform des erfindungsgemäßen Verfahrens ist dadurch gekennzeichnet, daß zur Aufschweißung eines Deckblattes auf eine End-, insbesondere Bodenfläche, eines Sackes die Erwärmung und das Gegeneinanderpressen von End- bzw. Bodenfläche und Deckblatt durch zumindest eine beheizte Walze oder Platte mit linien- odor punktförmiger Oberflächenprofilierung durchgeführt wird.

Gemäß einer weiteren Variante des erfindungsgemäßen Verfahrens erfolgt die Aufschweißung eines Deckblattes auf eine End-, insbesondere Bodenfläche, eines Sackes durch Reibschweißen.

Zur Verringerung des Schmelzpunktes der Beschichtung und zur Erzielung einer rutschfesten Beschichtungsfläche kann das erfindungsgemäße Verfahren so weitergebildet werden, daß der Beschichtung des Bändchengewebes und bzw. oder der Zwischenschicht aus thermoplastischem Kunststoff ein Copolymer aus Ethylen und Vinylacetat beigemischt wird.

Es kann besonders bei Kastensäcken oder Kastenventilsäcken zweckmäßig sein, daß vor dem Schritt des Einbringens einer Polymerschmelze zwischen Endfläche und Deckblatt zumindest eine Öffnung in zumindest einem längsseitigen Gewebelappen in jenem Bereich, der im gefalteten Zustand einen schmalseitigen Gewebelappen überlappt, ausgebildet wird. Auf diese Weise wird in den weiteren Verfahrensschritten die Oberseite des schmalseitigen Lappens direkt mit dem Deckblatt verschweißt und so das Bilden eines Trichters aus den Gewebelappen, durch den Füllgut aus dem Sack austreten könnte, verhindert.

Eine Variante des erfindungsgemäßen Verfahrens, durch die die Abdichtung des Faltungskantenbereiches bewirkt wird, ist dadurch gekennzeichnet, daß, insbesondere vor dem Falten der Lappen in eine Endfläche des Sackes, an zumindest einer Seite in einem Bereich nahe dem, insbesondere im, gemeinsamen Teil der Faltungskante zwischen einem längsseitigen und einem schmalseitigen Gewebelappen zumindest ein Klebepunkt bzw. eine Klebefläche aus einem Kaltkleber, Schmelzkleber oder einem thermoplastischen Kunststoff, insbesondere Polyolefin, mit niedrigerem Schmelzpunkt als das Material des Gewebes oder der Zwischenschicht aufgebracht und nach dem Falten der Lappen in einem weiteren Schritt durch Ausüben von Hitze und bzw. oder Druck das Klebematerial sowohl mit dem längsseitigen als auch dem schmalseitigen Lappen verbunden wird.

Die Oberseite des schmalseitigen Gewebelappens kann auch mit der Unterseite des darüberliegenden längsseitigen Lappens verschweißt werden, indem zwischen den einander überlappenden Bereichen der längsseitigen und der schmalseitigen Gewebelappen einer Sackendfläche Heißluft eingeblasen und die Lappen danach gegeneinander gepreßt und somit verbunden werden. Auch diese Ausgestaltung des Verfahrens verhindert das Aufblähen der durch das Falten gebildeten Taschen und somit die Trichterbildung.

Eine Ausführung des erfindungsgemäßen Verfahrens ist dadurch gekennzeichnet, daß die längsseitigen, die schmalseitigen und die durch Faltung eine Tasche bildenden Gewebelappen durch Anpressen eines geheizten Stifts oder einer geheizten Platte von der Außenseite der Sackendfläche miteinander verschweißt werden.

Eine für Ventilsäcke besonders günstige Variante des erfindungsgemäßen Verfahrens ist dadurch gekennzeichnet, daß vor dem Schritt des Einbringens einer Polymerschmelze zwischen Endfläche und Deckblatt zumindest eine Öffnung in zumindest einem der an der Bildung einer Sackendfläche beteiligten längsseitigen Gewebelappen in einem Bereich, der von der Innenkante des schmalseitigen Gewebelappens und der Innenkante eines zwischen dem schmalseitigen und den längsseitigen Lappen angeordneten Ventils begrenzt wird, ausgebildet wird. Dies erlaubt das Verschweißen von Ventiloberseite und Deckblattunterseite, wodurch das Umstülpen des Ventils beim Herausziehen eines Füllstutzens vermieden wird.

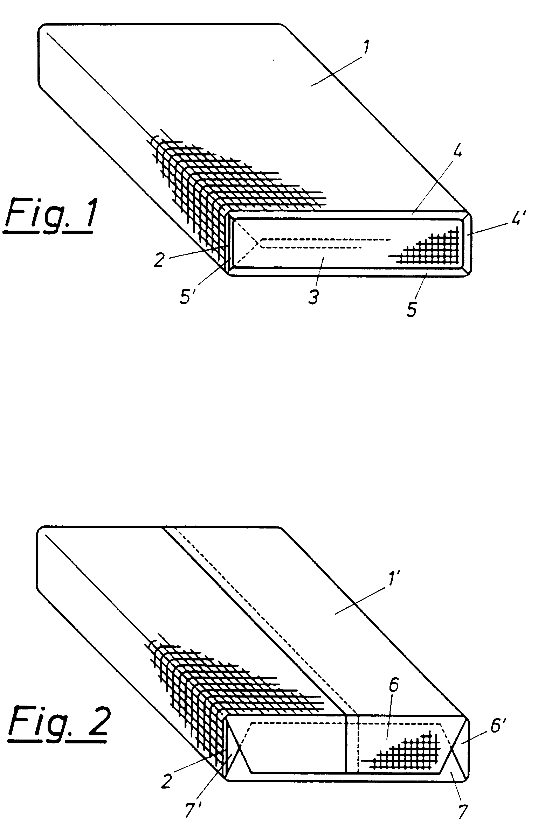

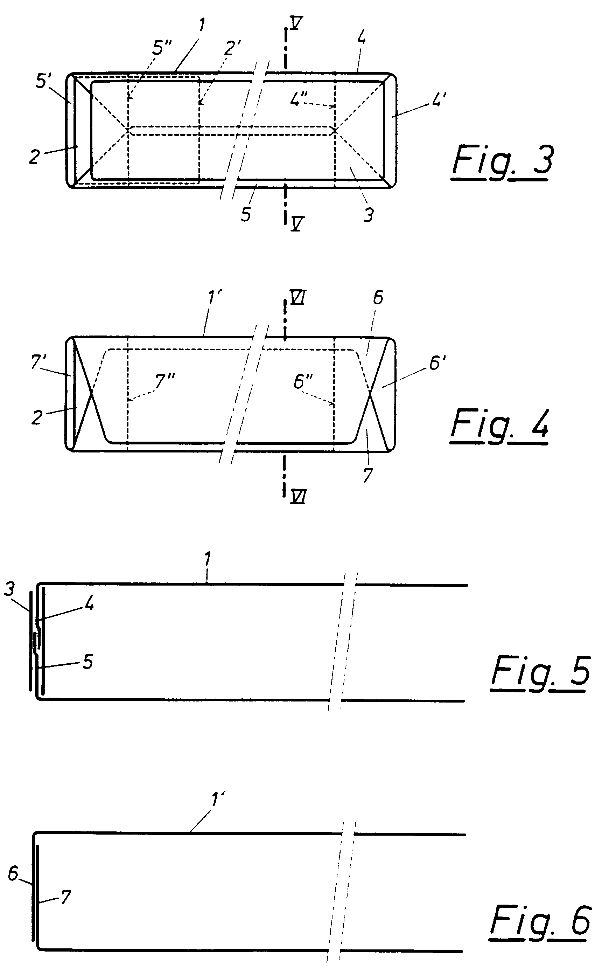

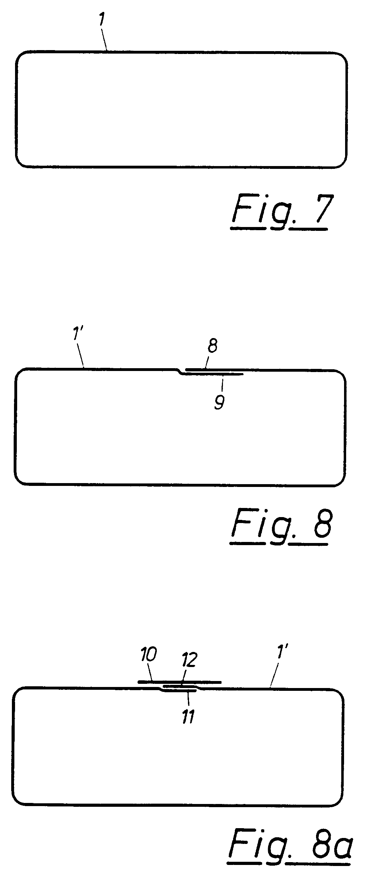

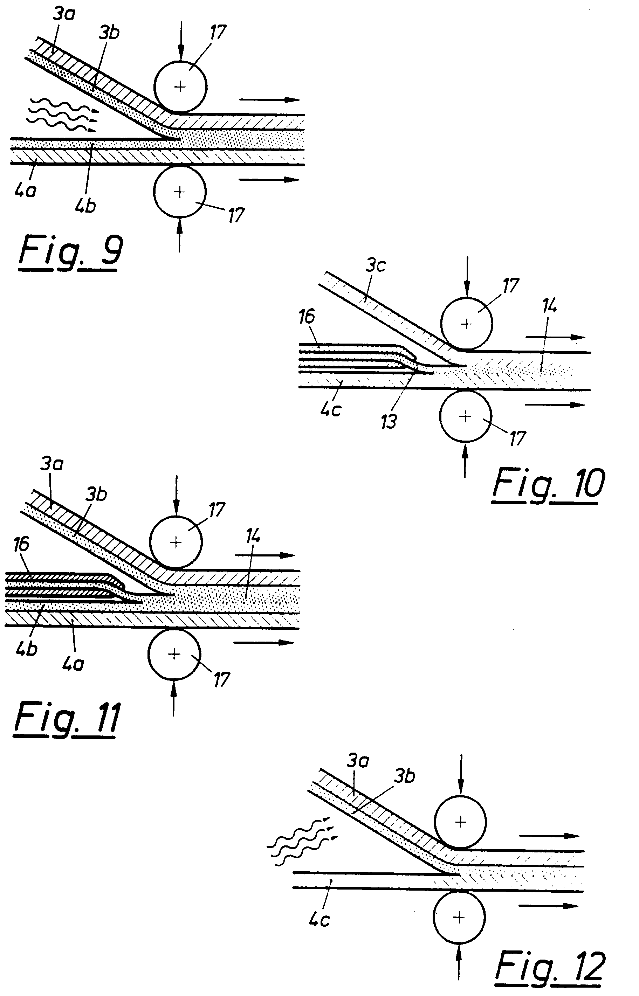

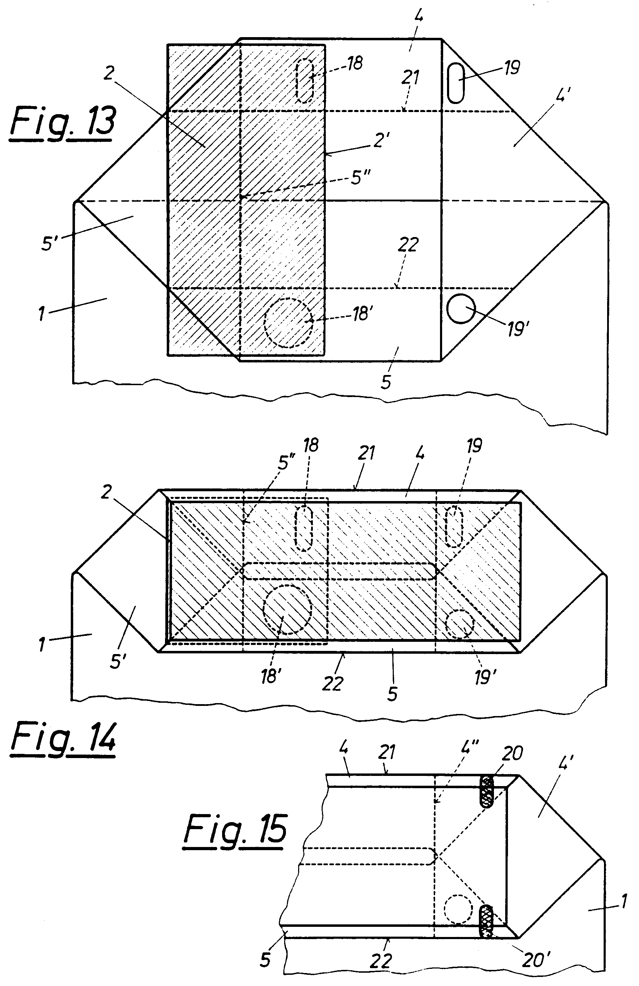

Die Erfindung wird nun unter Bezugnähme auf die Zeichnungen beispielhaft beschrieben. Dabei zeigen Fig. 1 einen erfindungsgemäßen Sack aus Rundgewebe in der Perspektive, Fig. 2 einen erfindungsgemäßen Sack aus Flachgewebe mit Längsnaht, Fig. 3 eine Draufsicht der Ventilseite mit Deckblatt der Ausführung gemäß Fig. 1, Fig.4 eine Draufsicht der Ventilseite ohne Deckblatt der Ausführung gemäß Fig. 2, Fig.5 einen Querschnitt eines Sackes mit Deckblatt, Fig. 6 einen Querschnitt eines Sackes ohne Deckblatt, Fig. 7 einen Querschnitt eines Sackes aus Schlauchgewebe, Fig. 8 einen Querschnitt eines Sackes aus Flachgewebe mit Extrusionslängsnaht, Fig.8a einen Querschnitt eines Sackes mit Längsnaht mit aufgeschweißtem oder aufgeklebtem Deckband, die Fig. 9-12 verschiedene Varianten der Durchführung des erfindungsgemäßen Verfahrens. Weiters zeigen Fig. 13 die Ventilseite einer Variante des Sackes von Fig. 1 im teilweise gefalteten Zustand und die Figuren 14 und 15 zusätzliche Ausgestaltungen der Endflächen des erfindungsgemäßen Sackes.

In Fig. 1 ist ein erfindungsgemäßer Sack in Kastenform dargestellt, der aus Rundgewebe 1 aus monoaxial verstreckten Polyolefinbändchen, z.B. aus Polypropylen oder Polyäthylen, besteht, die eine Dicke von 20-80 µm und eine Festigkeit von mehreren g/Denier, typisch 4-6,5 g/Denier aufweisen. Die Bodenflächen dieses Kastensackes werden durch Faltung von Gewebelappen 4,4',5,5' gebildet. Wie gestrichelt angedeutet, überragen die Lappen 4 und 5 einander nur wenig. Zwischen den Lappen 5' und 4 bzw. 5 ist weiters ein Ventil 2 angeordnet, das aus blatt- oder schlauchförmigen Materialien wie Geweben oder Folien besteht und durch das die Befüllung des Sackes vorgenommen wird. Ist der Sack befüllt, so schließt sich der Ventilschlauch durch den Druck des Füllguts gegen die Endfläche. Auf die Lappen 4,5 ist ein Deckblatt 3 aufgeschweißt. Die dafür vorgesehenen Schweißverfahren werden weiter unten beschrieben. Das Deckblatt 3 besteht vorzugsweise aus demselben Material wie das Gewebe 1, wobei Gewebe 1 und/oder Deckblatt 3 wahlweise ein- oder zweiseitig beschichtet sein können. Das besondere Kennzeichen des erfindungsgemäßen Sackes besteht darin, daß durch die Aufschweißung des Deckblattes die Ausrichtung der Molekülketten in den Bändchen nur in geringem Ausmaß nicht mehr gegeben ist, typisch bis zu einer Hitzeeindringtiefe von 2-40 µm, insbesondere 3-10 µm, sodaß das Gewebe kaum Verringerung der Festigkeit aufweist.

In Fig. 2 ist eine weitere Ausführungsform eines erfindungsgemäßen Sackes dargestellt. Diese unterscheidet sich von der in Fig. 1 gezeigten Variante vor allem dadurch, daß ein Flachgewebe 1' mit einer Längsnaht zu einem Schlauch geformt wurde und daß die Lappen 6 und 7, dadurch, daß sie sich fast vollständig überlappen, die Funktion von Bodenfläche und Deckblatt erfüllen und auf ein gesondertes Deckblatt verzichtet werden kann. Die beiden Lappen 6 und 7 sind nach einem erfindungsgemäßen Verfahren miteinander verschweißt.

Die Seitenlappen 6' und 7' sind entsprechend den Lappen 4' und 5' aus Fig. 1 gefaltet. Zwischen den Lappen 7' und 6 bzw. 7 ist wieder ein Schlauchventil 2 angeordnet.

Fig. 3 zeigt eine Draufsicht der Ventilseite des Sackes gemäß Fig. 1. Man erkennt, daß zuerst die Seitenlappen 4', 5' nach innen gefaltet wurden, die bis zur strichlierten Linie 4'', 5'' reichen, darüber ein Schlauchstück 2 als Ventil an einer Seite angeordnet ist, das innen bis zur Linie 2' ragt, darüber die beiden Lappen 4 und 5 gefaltet wurden und schließlich das Deckblatt 3 aufgeschweißt ist.

Fig. 4 zeigt eine Draufsicht der Ventilseite des Sackes gemäß Fig. 2. Die Seitenlappen 6', 7' mit ihren Kanten 6'', 7'' sind zuerst nach innen gefaltet und darüber sind die Lappen 6 und 7 gefaltet und miteinander verschweißt, wobei der Lappen 7 als Bodenfläche und der Lappen 6 als Deckblatt dienen. Ein Ventil 2 ist zwischen den Lappen 7' und 6 bzw. 7 vorgesehen.

Fig. 5 zeigt eben Längsschnitt entlang der Linie V-V von Fig. 3. Daraus wird deutlich, wie die Lappen 4 und 5 und das Deckblatt 3 übereinanderliegen.

Fig. 6 zeigt einen Längsschnitt entlang der Linie VI-VI von Fig. 4. Daraus ist deutlich zu ersehen, wie die Lappen 6 und 7 übereinanderliegen.

Die Fig. 7,8,8a zeigen verschiedene Querschnittsformen von erfindungsgemäßen Säcken. In Fig. 7 ist ein Sack aus Bändchenrundgewebe 1, in Fig. 8 ein Sack aus Flachgewebe 1', dessen übereinandergelegte Enden 8,9 mit einer Längsnaht verbunden wurden und das so zu einem Schlauch ausgebildet wurde, wobei die Längsnaht auch eine Extrusionsnaht sein kann, und in Fig. 8a ein Sack aus Flachgewebe mit Längsnaht mit aufgeschweißtem oder aufgeklebtem Deckband 10 über den übereinanderliegenden Enden 11,12 zu sehen.

Unter Bezugnahme auf die Fig. 9-12 werden nun verschiedene Varianten des Verfahrens zur Aufschweißung des Deckblattes beschrieben.

In Fig. 9 ist eine Variante dargestellt, bei der ein Deckblatt, bestehend aus einem Bändchengewebe 3a und einer Beschichtung 3b aus Polyolefinen, z.B. Polypropylen, mit einem Sacklappen, bestehend aus einem Bändchengewebe 4a und einer Beschichtung 4b aus demselben Polyolefinmaterial miteinander verbunden werden sollen. Die Stärken der Bändchengewebe 3a,4a betragen zwischen 40 und 160 µm, die Stärken der Beschichtungen 3b,4b 5-60 µm. Dazu werden die einander zugewandten Beschichtungsseiten 3b,4b bis in eine Eindringtiefe von 2-40 µm, insbesondere 3-10 µm bis zur Plastifizierung erwärmt und zwischen zwei gekühlten Walzen 17,17 in Pfeilrichtung durchgezogen, wobei die Schichten 3b, 4b miteinander verpreßt werden, sodaß eine innige Verbindung entsteht und durch das Walzenpaar 17,17 gleichzeitig die Abkühlung erfolgt, die notwendig ist, damit das Bändchengewebe 3a, 4a keine durch Wärme verursachte Beschädigung erfährt. Da hauptsächlich die Beschichtung erhitzt wird, verlieren die Bändchen nur bis in eine geringe Tiefe die Orientierung ihrer Molekülketten, sodaß kein merklicher Festigkeitsverlust auftritt.

Fig. 10 zeigt eine weitere Verfahrensvariante, bei der zwei nicht beschichtete Gewebe 3c,4c miteinander verschweißt werden. Dazu wird eine Schicht Schmelze 14 aus einer Breitschlitzextrusionsdüse 16 zwischen die Bändchengewebe 3c,4c eingebracht. Gewebe 3c,4c und Schmelze 14 bestehen üblicherweise aus demselben Polyolefinmaterial. Die Extrusionstemperatur der Schmelze beträgt 150-380°C, vorzugsweise 230-260 °C. Die Gewebe werden in Pfeilrichtung zwischen einem Kühlwalzenpaar 17,17 durchgezogen und dabei mit der Schmelze 14 verpreßt und gleichzeitig abgekühlt, sodaß die Bändchen nicht wesentlich in ihrer Festigkeit beeinträchtigt werden.

Diese Ausführung des Verfahrens ist jedoch nicht auf unbeschichtete Bändchengewebe beschränkt, sondern kann auch auf beschichtetes Gewebe angewandt werden, wie in Fig. 11 gezeigt, wo ein Deckblatt, das aus Bändchengewebe 3a mit einer Beschichtung 3b besteht, und ein Lappen, bestehend aus Bändchengewebe 4a und einer Beschichtung 4b, durch Einbringen einer Schmelze 14 zwischen die Beschichtungsseiten miteinander verschweißt werden. Durch die Anpressung bilden die Beschichtungen 3b,4b und die Schmelze 14 eine homogene Zwischenschicht.

Andererseits kann die Verschweißung durch Erhitzen einer Gewebebeschichtung auch dann durchgeführt werden, wenn nur eines der Gewebe beschichtet ist, wie in Fig. 12 gezeigt. Dabei wird nicht beschichtetes Gewebe 4c mit Gewebe 3a, das eine Beschichtung 3b aufweist, durch Wärmeverschweißung innig verbunden.

Weiters kann dem thermoplastischen Kunststoff, insbesondere Polyolefinmaterial, aus dem die Beschichtung und/oder die Zwischenschicht bestehen, ein Copolymer aus Ethylen und Vinylacetat beigemischt werden, das allgemein als EVA bekannt ist. Dieses EVA besitzt einen niedrigeren Schmelzpunkt als Polyethylen. Durch Beigabe von EVA wird die Verschweißbarkeit der Beschichtung merklich verbessert. Außerdem bildet die Beschichtung durch die Beimischung von EVA einen rutschfesten Belag, was die Stapelbarkeit der erfindungsgemäßen Säcke erhöht.

In den Figuren 13 bis 15 wird näher auf spezielle Probleme eingegangen, die bei Kastensäcken und insbesondere bei Kastenventilsäcken auftreten. In Fig. 13 ist eine Variante des Sackes von Fig. 1 im teilweise gefalteten Zustand zu sehen. Am Ende des Rundgewebes 1 sind bereits die schmalseitigen Gewebelappen 4',5' nach innen gebogen und die Ventilfolie 2 auf dem Lappen 5' befestigt. Das Befestigen der Folie 2 auf dem Lappen 5' erfolgt zweckmäßig durch Wärmeschweißen auf einer rechteckigen Fläche, die durch die Faltungskanten 21,22, die Außenkante der Folie 2 und die Innenkante 5'' des Lappens 5' begrenzt wird. Im weiteren Verlauf des Verarbeitungsprozesses werden die längsseitigen Lappen 4,5 entlang der Faltungskanten 21,22 nach innen gebogen, wodurch auch die Seiten der Folie 2 nach innen umgebogen werden und das Schlauchventil 2 gebildet wird. Anschließend wird ein Deckblatt 3 nach dem erfindungsgemäßen Verfahren auf die Endfläche des Sacks aufgeschweißt. Diese Fertigungsstufe ist in Fig. 14 dargestellt, auf die nun ebenfalls Bezug genommen wird. Durch das Schlauchventil 2 kann ein Stutzen eingeschoben werden, um den Sack mit Füllgut zu befüllen. Dabei entsteht in Füllanlagen das Problem, daß manchmal durch den beim Füllvorgang entstehenden Überdruck im Sackinneren oder durch das Anhaften des Ventils am Stutzen durch Wärme oder Reibung beim Herausziehen des Stutzens der frei im Sackinneren hängende Teil des Ventils bis zu seiner Verbindungsstelle am Lappen 5' umgestülpt wird. In der Folge verliert das Ventil teilweise seine Dichtwirkung, da sich durch das Umstülpen des Schlauchs die wirksame Länge des Ventils beträchtlich verkürzt hat. Erfindungsgemäß wird dieses Problem dadurch gelöst, daß in den Seitenlappen 4,5 in einem Bereich zwischen der Kantenlinie 5'' des Lappens 5' und der Innenkante 2' des Ventils 2 Öffnungen 18,18' ausgestanzt werden, so daß nach dem Einwärtsfalten der Lappen 4,5 das Deckblatt 3 durch diese Öffnungen 18,18' hindurch mit der Oberseite des Ventils 2 verschweißt werden kann. Dadurch wird wirkungsvoll verhindert, daß das Ventil 2 zusammen mit dem Füllstutzen herausgezogen wird. Die Form der Öffnungen kann beliebig gewählt werden. So ist beispielhaft die Öffnung 18 länglich und die Öffnung 18' kreisrund ausgeführt.

Bei Kastensäcken allgemein und bei Ventilkastensäcken im besonderen macht sich ein weiterer Effekt störend bemerkbar, nämlich daß durch das Falten der Gewebelappen 4,4',5,5' zu einer Endfläche im Sackinneren vier dreieckige Taschen ausgebildet werden, die wie Trichter wirken, deren Auslaßöffnungen sich in den Faltungskanten 21,22 befinden. Aus fertigungstechnischen Gründen ist es nicht möglich, das Deckblatt 3 exakt bis zu den Faltungskanten 21,22 anzuschweißen, so daß im allgemeinen an den Enden der Faltungskanten kleine Öffnungen freibleiben, die in die oben erwähnten Taschen münden. Dies stört am Sackboden nicht, da durch das Gewicht des Füllguts die Taschen zusammengepreßt und dadurch verschlossen werden. Beim Befüllen von Kastenventilsäcken jedoch, wo durch einen eingeführten Stutzen das Füllmaterial mittels Druckluft eingebracht wird, blähen sich durch die einströmende Druckluft an der dem Ventil gegenüberliegenden Seite diese Taschen zu Trichtern auf und das meist pulvrige Material wird durch den "Trichterauslaß" aus dem Sack herausgepreßt. Um dies zu vermeiden, sind in den längsseitigen Lappen 4,5 weitere Öffnungen 19,19' in einem Bereich der Lappen 4,5 vorgesehen, der nach dem Falten den schmalseitigen Gewebelappen 4' überlappt. Wird das Deckblatt 3 aufgeschweißt, so wird durch diese Öffnungen 19,19' hindurch der Lappen 4' mit dem Deckblatt 3 verbunden und somit das Aufblähen bzw. die Trichterbildung verhindert.

Ein anderer Ansatz, mit dem das Ausströmen von pulvrigem Füllgut aus den Ecken der Sackendfläche verhindert werden kann, ist in Fig. 15 gezeigt. Die Endfläche wird wiederum durch Falten der Lappen 4,4',5 des Schlauchgewebes 1 gebildet. Der schmalseitige Lappen 4' reicht bis zur Kante 4'', zur Sackmitte. Es sind auch zwei aus den Überlappungen gebildete Taschen erkennbar. Bei dieser Ausgestaltung der Erfindung werden die Öffnungen in den Faltungskanten 21,22 verschlossen, indem vor dem Falten der Lappen 4,4',5 in eine Endfläche des Sackes im gemeinsamen Teil der Faltungskante 21,22 zwischen einem längsseitigen 4,5 und einem schmalseitigen 4' Gewebelappen ein Klebepunkt bzw. eine Klebefläche 20,20' aus einem Kaltkleber, Schmelzkleber oder einem thermoplastischen Kunststoff, insbesondere Polyolefin, mit niedrigerem Schmelzpunkt als das Material des Gewebes oder der Zwischenschicht aufgebracht und nach dem Falten der Lappen in einem weiteren Schritt durch Ausüben von Hitze und bzw. oder Druck das Klebematerial 20,20' sowohl mit dem längsseitigen 4,5 als auch dem schmalseitigen 4' Lappen verbunden wird. Es besteht auch die Möglichkeit, die vier Gewebelagen, nämlich den längsseitigen, den schmalseitigen und die beiden die Tasche bildenden Gewebelappen durch Anpressen eines geheizten Stifts oder einer geheizten Platte an die Außenseite der Sackendfläche und durch Dagegenpressen einer wärmebeständigen, z.B. teflonbeschichteten, Platte von der Sackinnenseite durch einen Schweißpunkt. bzw. eine Schweißfläche miteinander zu verbinden. Im Bereich der Schweißfläche geht zwar die Ausrichtung der Molekülketten verloren, da aber einerseits die Schweißfläche im Verhältnis zur Gesamtendfläche sehr klein ist und andererseits im Schweißbereich vier Lagen miteinander verbunden sind, tritt keine Verringerung der Gesamtfestigkeit der Endfläche ein. Auf diese Weise ist mit geringem Aufwand das vollständige Verschließen der Endfläche des Sackes erzielbar.

## Patentansprüche

1. Sack aus Gewebe aus monoaxial verstreckten, einschichtigen Polymer-, insbesondere Polyolefin-, vorzugsweise Polypropylenbändchen, das ein- oder zweiseitig mit thermoplastischem Kunststoff, insbesondere Polyolefin, beschichtet sein kann, wobei das Gewebe ein schlauchartiges Rundgewebe oder ein zu einem Schlauch verbundenes Flachgewebe ist und mindestens ein Ende des Sackes durch Falten der Gewebeenden zu einer, insbesondere rechteckigen, Bodenfläche ausgeformt ist, dadurch gekennzeichnet, daß mindestens ein Sackende, insbesondere eine Bodenfläche, über eine Zwischenschicht (3b, 4b; 13) aus thermoplastischem Kunststoff-, insbesondere Polyolefin-, vorzugsweise Polypropylenmaterial, durch Wärmeeinwirkung mit einem Deckblatt (3; 6) aus Gewebe aus monoaxial verstreckten Polymer-, insbesondere Polyolefin-, vorzugsweise Polypropylenbändchen, verbunden ist und daß weniger als 30 % der Materialdicke der Gewebebändchen von Bodenfläche und Deckblatt infolge der Wärmeeinwirkung desorientierte Moleküle aufweisen, wobei im übrigen Materialbereich die Molekülorientierung vorhanden ist.

2. Sack nach Anspruch 1, dadurch gekennzeichnet, daß die zu einem Sackende, insbesondere einer Bodenfläche, gefalteten Gewebeteile (4,4',5,5') einander nicht oder nicht wesentlich überlappen und ein gesondertes Deckblatt (3) zur Bodenabdichtung vorgesehen ist.

3. Sack nach Anspruch 1, dadurch gekennzeichnet, daß das Sackende, insbesondere die Bodenfläche, und das Deckblatt durch Überlappungen (6,6',7,7') bei der Faltung des Sackgewebes gebildet sind.

4. Sack nach einem der Ansprüche 1 bis 3, dadurch gekennzeichnet, daß zwischen Sackende, insbesondere Bodenfläche, und Deckblatt eine separate Schicht (13) aus Kunststoff-, insbesondere Polyolefin-, vorzugsweise Polypropylenschmelze als Zwischenschicht aufgetragen ist.

5. Sack nach einem der Ansprüche 1 bis 3, dadurch gekennzeichnet, daß bei ein- oder zweiseitig beschichtetem Bändchengewebe diese Beschichtung (3b,4b) als Zwischenschicht zwischen Seckende bzw. Bodenfläche und Deckblatt dient.

6. Sack nach einem der vorhergehenden Ansprüche, dadurch gekennzeichnet, daß der Beschichtung (3b,4b) des Bändchengewebes und bzw. oder der Zwischenschicht (13) aus thermoplastischem Kunststoff ein Copolymer aus Ethylen und Vinylacetat beigemischt ist.

7. Sack nach einem der vorhergehenden Ansprüche, dadurch gekennzeichnet, daß an zumindest einer Seite einer aus den Gewebelappen (4,4',5,5') gebildeten Endfläche in einem Bereich nahe dem, insbesondere im, gemeinsamen Teil der Faltungskante (21,22) zwischen einem längsseitigen (4,5) und einem schmalseitigen (4',5') Gewebelappen zumindest ein Klebepunkt bzw. eine Klebefläche (20,20') aus einem Kaltkleber, Schmelzkleber oder einem thermoplastischen Kunststoff, insbesondere Polyolefin, mit niedrigerem Schmelzpunkt als das Material des Gewebes oder der Zwischenschicht vorgesehen ist.

8. Sack nach einem der vorhergehenden Ansprüche, dadurch gekennzeichnet, daß an zumindest einer Seite einer aus den Gewebelappen (4,4',5,5') gebildeten Endfläche zumindest einer der längsseitigen Gewebelappen (4,5) in jenem Bereich, der im gefalteten Zustand einen schmalseitigen Gewebelappen (4',5') überlappt, zumindest eine Öffnung (19,19') aufweist.

9. Sack nach einem der vorhergehenden Ansprüche, dadurch gekennzeichnet, daß die eine Endfläche des Sackes bildenden längsseitigen (4,5) und schmalseitigen (4',5') Gewebelappen in den Bereichen, in denen sie einander überlappen, zumindest teilweise miteinander verschweißt sind.

10. Sack nach einem der vorhergehenden Ansprüche, dadurch gekennzeichnet, daß in den Bereichen der Endflächen, in denen die Taschen durch Faltung gebildet sind, alle übereinanderliegenden Gewebelagen durch einen Schweißpunkt oder eine Schweißfläche miteinander verbunden sind.

11. Sack nach einem der Ansprüche 1 bis 10, dadurch gekennzeichnet, daß zwischen Sackende bzw. Bodenfläche und Deckblatt weiters mindestens ein Ventil (2) vorgesehen ist, durch das der Sack befüllbar ist und das bei vollem Sack durch den Druck des Füllmaterials selbsttätig verschließbar ist.

12. Sack nach Anspruch 11, dadurch gekennzeichnet, daß in zumindest einem der an der Bildung einer Sackendfläche beteiligten längsseitigen Gewebelappen (4,5) im Bereich zwischen der Innenkante (5'') des schmalseitigen Gewebelappens (5') und der Innenkante (2') des zwischen dem schmalseitigen (5') und den längsseitigen (4,5) Lappen angeordneten Ventils (2) zumindest eine Öffnung (18,18') angeordnet ist.

13. Sack nach einem der Ansprüche 1 bis 12, dadurch gekennzeichnet, daß das Bändchengewebe perforiert ist.

14. Verfahren zur Aufschweißung eines Deckblattes auf eine End-, insbesondere Bodenfläche eines Sackes, insbesondere nach einem der Ansprüche 1 bis 11, wobei das Sackmaterial aus Gewebe aus monoaxial verstreckten Polymer-, insbesondere Polyolefin-, vorzugsweise Polypropylenbändchen, insbesondere mit einer Dicke von 20-80 µm, besteht und das Deckblatt aus Folie oder Gewebe aus monoaxial verstreckten Polymer-, insbesondere Polyolefin-, vorzugsweise Polypropylenbändchen, besteht, gekennzeichnet durch das Einbringen einer, insbesondere auf eine Temperatur von 150-380 °C, erhitzten, vorzugsweise 5-60 µm dicken Zwischenschicht aus Polymer-, insbesondere Polyolefin-, vorzugsweise Polypropylenschmelze zwischen Endfläche und Deckblatt, das darauffolgende Gegeneinanderpressen von Endfläche und Deckblatt und die Abkühlung von Endfläche, Zwischenschicht und Deckblatt auf Umgebungstemperatur von den Außenseiten von Endfläche und Deckblatt, so daß weniger als 30 % der Materialdicke der Gewebebändchen der Bodenfläche bzw. der Materialdicke des Deckblattes infolge der Wärmeeinwirkung desorientierte Moleküle aufweisen, wobei im übrigen Materialbereich die Molekülorientierung erhalten bleibt.

15. Verfahren zur Aufschweißung eines Deckblattes auf eine End-, insbesondere Bodenfläche eines Sackes, insbesondere nach einem der Ansprüche 1 bis 11, wobei das Sackmaterial aus Gewebe aus monoaxial verstreckten Polymer-, insbesondere Polyolefin-, vorzugsweise Polypropylenbändchen, insbesondere mit einer Dicke von 20-80 µm, besteht und das Deckblatt aus Folie oder Gewebe aus monoaxial verstreckten Polymer-, insbesondere Polyolefin-, vorzugsweise Polypropylenbändchen besteht, wobei zumindest ein Gewebe bzw. die Folie davon mit einer Schicht aus thermoplastischem Kunststoff, insbesondere mit einer Dicke von 5-60 µm, beschichtet ist, die im Aufschweißungsverfahren dem anderen Gewebe bzw. der Folie zugewandt ist, gekennzeichnet durch das innenseitige Erhitzen der Beschichtung bzw. Beschichtungen bis zur Plastifizierung, insbesondere auf eine Temperatur von 150-380 °C, das darauffolgende Gegeneinanderpressen von Endfläche und Deckblatt und die Abkühlung von Endfläche, Beschichtung bzw. Beschichtungen und Deckblatt auf Umgebungstemperatur von den Außenseiten von Endfläche und Deckblatt, so daß weniger als 30 % der Materialdicke der Gewebebändchen der Bodenfläche bzw. der Materialdicke des Deckblattes infolge der Wärmeeinwirkung desorientierte Moleküle aufweisen, wobei im übrigen Materialbereich die Molekülorientierung erhalten bleibt.

16. Verfahren nach Anspruch 14 oder 15, dadurch gekennzeichnet, daß zur Aufschweißung eines Deckblattes auf eine End-, insbesondere Bodenfläche, eines Sackes die Abkühlung und das Gegeneinanderpressen von End- bzw. Bodenfläche und Deckblatt gleichzeitig durch zumindest ein gekühltes Druckelement, insbesondere Walzenpaar (17,17), durchgeführt wird.

17. Verfahren nach Anspruch 14, dadurch gekennzeichnet, daß zur Aufschweißung eines Deckblattes auf eine End-, insbesondere Bodenfläche, eines Sackes die Einbringung der Kunststoff-, insbesondere Polyolefin-, vorzugsweise Polypropylenschmelze durch eine Breitschlitz- oder Fadenextrusionsdüse (16) erfolgt.

18. Verfahren nach Anspruch 14 oder 15, dadurch gekennzeichnet, daß zur Aufschweißung eines Deckblattes auf eine End-, insbesondere Bodenfläche, eines Sackes die Erwärmung und das Gegeneinanderpressen von End- bzw. Bodenfläche und Deckblatt durch zumindest eine beheizte Walze oder Platte mit linien- oder punktförmiger Oberflächenprofilierung durchgeführt wird.

19. Verfahren nach Anspruch 14 oder 15, dadurch gekennzeichnet, daß die Aufschweißung eines Deckblattes auf eine End-, insbesondere Bodenfläche, eines Sackes durch Reibschweißen erfolgt.

20. Verfahren nach einem der Ansprüche 14 bis 19, dadurch gekennzeichnet, daß der Beschichtung (3b,4b) des Bändchengewebes und bzw. oder der Zwischenschicht (13) aus thermoplastischem Kunststoff ein Copolymer aus Ethylen und Vinylacetat beigemischt wird.

21. Verfahren nach einem der Ansprüche 14 bis 20, dadurch gekennzeichnet, daß vor dem Schritt des Einbringens einer Polymerschmelze zwischen Endfläche und Deckblatt zumindest eine Öffnung (19,19') in zumindest einem längsseitigen Gewebelappen (4,5) in jenem Bereich, der im gefalteten Zustand einen schmalseitigen Gewebelappen (4',5') überlappt, ausgebildet wird.

22. Verfahren nach einem der Ansprüche 14 bis 21, dadurch gekennzeichnet, daß insbesondere vor dem Falten der Lappen (4,4',5,5') in eine Endfäche des Sackes, an zumindest einer Seite in einem Bereich nahe dem, insbesondere im, gemeinsamen Teil der Faltungskante (21,22) zwischen einem längsseitigen (4,5) und einem schmalseitigen (4',5') Gewebelappen zumindest ein Klebepunkt bzw. eine Klebefläche (20,20') aus einem Kaltkleber, Schmelzkleber oder einem thermoplastischen Kunststoff, insbesondere Polyolefin, mit niedrigerem Schmelzpunkt als das Material des Gewebes oder der Zwischenschicht aufgebracht und nach dem Falten der Lappen in einem weiteren Schritt durch Ausüben von Hitze und bzw. oder Druck das Klebematerial (20,20') sowohl mit dem längsseitigen (4,5) als auch dem schmalseitigen (4',5') Lappen verbunden wird.

23. Verfahren nach einem der Ansprüche 14 bis 22, dadurch gekennzeichnet, daß zwischen den einander überlappenden Bereichen der längsseitigen (4,5) und der schmalseitigen (4',5') Gewebelappen einer Sackendfläche Heißluft eingeblasen und die Lappen danach gegeneinander gepreßt und somit verbunden werden.

24. Verfahren nach einem der Ansprüche 14 bis 23, dadurch gekennzeichnet, daß die längsseitigen (4,5), die schmalseitigen (4',5') und die durch Faltung eine Tasche bildenden Gewebelappen durch Anpressen eines geheizten Stifts oder einer geheizten Platte von der Außenseite der Sackendfläche miteinander verschweißt werden.

25. Verfahren nach einem der Ansprüche 14 bis 24, dadurch gekennzeichnet, daß vor dem Schritt des Einbringens einer Polymerschmelze zwischen Endfläche und Deckblatt zumindest eine Öffnung (18,18') in zumindest einem der an der Bildung einer Sackendfläche beteiligten längsseitigen Gewebelappen (4,5) in einem Bereich, der von der Innenkante (5'') des schmalseitigen Gewebelappens (5') und der Innenkante (2') eines zwischen dem schmalseitigen (5') und den längsseitigen (4,5) Lappen angeordneten Ventils (2) begrenzt wird, ausgebildet wird.

## Claims

1. A sack made of fabric consisting of monoaxially drawn single-layer tapes of polymer, particularly polyolefine, preferably polypropylene, which fabric may be coated on one or both sides with thermoplastic material, particularly polyolefine, wherein the fabric is a seemless tubular fabric or a flat fabric combined to form a tube and at least one end of the sack is formed by folding the fabric ends to an in particular rectangular bottom surface, characterized in that at least one end of the sack, particularly a bottom surface, is bonded, via an intermediate layer (3b, 4b; 13) made of thermoplastic, particularly polyolefine, preferably polypropylene material, and by means of heat, to a cover sheet (3; 6) made of fabric consisting of monoaxially drawn tapes of polymer, particularly polyolefine, preferably polypropylene, and in that less than 30 % of the material thickness of the fabric tapes of the bottom surface and the cover sheet include molecules disoriented due to the heat, the molecules being oriented in the remaining area of the material.

2. A sack according to claim 1, characterized in that the fabric parts (4, 4', 5, 5') folded to form an end of the sack, particularly a bottom surface, do not or not substantially overlap each other and in that a separate cover sheet (3) is provided to seal off the bottom.

3. A sack according to claim 1, characterized in that the end of the sack, particularly the bottom surface, and the cover sheet are formed by overlapping areas (6, 6', 7, 7') when folding the sack fabric.

4. A sack according to any one of claims 1 to 3, characterized in that a separate layer (13) made of molten plastic material, particularly polyolefine, preferably polypropylene, is interposed as an intermediate layer between the end of the sack, particularly the bottom surface, and the cover sheet.

5. A sack according to any one of claims 1 to 3, characterized in that, in the case of tape fabric coated on one or both sides, this coating (3b, 4b) serves as an intermediate layer between the end of the sack or bottom surface and the cover sheet.

6. A sack according to any one of the preceding claims, characterized in that an ethylene/vinyl acetate copolymer is mixed with the coating (3b, 4b) of the tape fabric and/or the intermediate layer (13) made of thermoplastic material.

7. A sack according to any one of the preceding claims, characterized in that at least one adhesive point or adhesive area (20, 20') made of cold-bonding agent, a hot-melt-type adhesive or a thermoplastic material, particularly polyolefine, having a lower melting point than the material of the fabric or the intermediate layer, is provided on at least one side of one end surface formed by the fabric flaps (4,4',5,5') in an area near, particularly within, the common part of the folding edge (21, 22) between a longitudinal (4, 5) and a narrow-side (4',5') fabric flap.

8. A sack according to any one of the preceding claims, characterized in that on at least one side of an end surface formed by the fabric flaps (4,4',5,5') at least one of the longitudinal fabric flaps (4,5) has at least one opening (19,19') in that area which, in its folded state, overlaps a narrow-side fabric flap (4', 5').

9. A sack according to any one of the preceding claims, characterized in that the longitudinal (4, 5) and narrow-side (4', 5') fabric flaps forming one end surface of the sack are at least partly welded together in those areas in which they overlap each other.

10. A sack according to any one of the preceding claims, characterized in that, in those areas of the end surfaces in which the pockets are formed by folding, all superimposed layers of fabric are bonded to each other by a welding point or a welding area.

11. A sack according to any of claims 1 to 10, characterized in that between the end of the sack, or bottom surface, and the cover sheet there is furthermore provided at least one valve (2) through which the sack can be filled and which, when the sack is full, can be closed automatically by the pressure of the filling material.

12. A sack according to claim 11, characterized in that at least one opening (18, 18') is arranged in at least one longitudinal fabric flap (4, 5) involved in the formation of an end surface of the sack in the area betweeen the inner edge (5'') of the narrow-side fabric flap (5') and the inner edge (2') of the valve (2) disposed between the narrow-side (5') and the longitudinal (4, 5) flaps.

13. A sack according to one of claims 1 to 12, characterized in that the tape fabric is perforated.

14. A process for welding a cover sheet onto an end surface, in particular a bottom surface, of a sack, particularly according to one of claims 1 to 11, wherein the sack material consists of fabric made of monoaxially drawn tapes of polymer, particularly polyolefine, preferably polypropylene, particularly having a thickness of 20 - 80 µm, and wherein the cover sheet consists of foil or fabric made of monoaxially drawn tapes of polymer, particularly polyolefine, preferably polypropylene, characterized in that an intermediate layer made of molten polymer, particularly polyolefine, preferably polypropylene, particularly having a thickness of 5 -60 µm, is introduced particularly at a temperature of 150 - 380°C, between the end surface and the cover sheet, in that the end surface and the cover sheet are subsequently pressed together and in that the end surface, the intermediate layer and the cover sheet are cooled to ambient temperature from the outside of the end surface and the cover sheet, so that less than 30 % of the material thickness of the fabric tapes of the bottom surface or of the material thickness of the cover sheet have molecules disoriented due to the heat, the orientation of the molecules being maintained in the remaining area of the material.

15. A process for welding a cover sheet onto an end surface, in particular a bottom surface, of a sack, particularly according to any of claims 1 to 11, wherein the sack material consists of fabric made of monoaxially drawn tapes of polymer, in particular polyolefine, preferably polypropylene, particularly having a thickness of 20 - 80 µm, and wherein the cover sheet consists of foil or fabric made of monoaxially drawn tapes of polymer, particularly polyolefine, preferably polypropylene, at least one fabric or the foil thereof being coated with a layer of thermoplastic material, particularly having a thickness of 5-60 mm, which, in the process of welding on, faces towards the other fabric or the foil, characterized in that the coating or the coatings is/are heated to the point of plastification, in particular to a temperature of 150 - 380°C, in that the end surface and the cover sheet are subsequently pressed against each other, and in that the end surface, the coating or coatings and the cover sheet are cooled down to ambient temperature from the outside of the end surface and the cover sheet, so that less than 30 % of the material thickness of the fabric tapes of the bottom surface or of the material thickness of the cover sheet have molecules disoriented due to the heat, the orientation of the molecules being maintained in the remaining area of the material.

16. A process according to claim 14 or 15, characterized in that, for welding a cover sheet onto an end surface, particularly a bottom surface, of a sack, the cooling and pressing steps of the end or bottom surface and the cover sheet are effected simultaneously by means of at least one cooled pressing element, particularly a pair of rollers (17, 17).

17. A process according to claim 14, characterized in that, for welding a cover sheet onto an end surface, particularly a bottom surface, of a sack, said molten plastic material, particularly polyolefine, preferably polypropylene, is introduced through a broad slit or fiber-extrusion die (16).

18. A process according to claim 14 or 15, characterized in that, for welding a cover sheet onto an end surface, particularly a bottom surface, of a sack, the end or bottom surface and the cover sheet are heated and pressed against each other by at least one heated roller or plate having a line or point-like surface profile.

19. A process according to claim 14 or 15, characterized in that the welding of a cover sheet onto an end surface, particularly a bottom surface, of a sack is effected by friction welding.

20. A process according to any one of claims 14 to 19, characterized in that an ethylene/vinyl acetate copolymer is mixed with the coating (3b, 4b) of the tape fabric and/or the intermediate layer (13) made of thermoplastic material.

21. A process according to any one of claims 14 to 20, characterized in that prior to the step of introducing molten polymer between the end surface and the cover sheet at least one opening (19, 19') is provided in at least one longitudinal fabric flap (4, 5) in that area which, in its folded state, overlaps a narrow-side fabric flap (4', 5').

22. A process according to any one of claims 14 to 21, characterized in that particularly prior to folding the flaps (4, 4', 5, 5') to an end surface of the sack at least one adhesive point or adhesive area (20, 20') of a cold-bonding agent, hot-melt-type adhesive or a thermoplastic material, particularly polyolefine, having a lower melting point than the material of the fabric or of the intermediate layer is provided on at least one side in an area close to, in particular within, the common portion of the folding edge (21, 22) between a longitudinal (4, 5) and a narrow-side (4', 5') fabric flap and in that, after folding the flaps, the adhesive material (20, 20') is bonded to the longitudinal (4, 5) as well as the narrow-side (4', 5') flaps in a further step by applying heat and/or pressure.

23. A process according to any one of claims 14 to 22, characterized in that hot air is blown in between the overlapping areas of the longitudinal (4, 5) and narrow-side (4', 5') fabric flaps of one end surface of the sack and after that the flaps are pressed against each other, thereby bonding them together.

24. A process according to any one of claims 14 to 23, characterized in that the fabric flaps disposed longitudinally (4, 5) and on the narrow side (4', 5') as well as those forming a pocket by folding are welded with each other by pressing a heated pin or a heated plate against them from outside the end surface of the sack.

25. A process according to any one of claims 14 to 24, characterized in that prior to the step of introducing molten polymer between the end surface and the cover sheet at least one opening (18, 18') is formed in at least one longitudinal fabric flap (4, 5) involved in the formation of an end surface of the sack in an area which is defined by the inner edge (5'') of the narrow-side fabric flap (5') and the inner edge (2') of a valve disposed between the narrow-side (5') and the longitudinal (4, 5) flaps.

## Revendications

1. Un sac en toile composé de bandelettes de polymère à étirement monoaxial à une couche, en particulier de polyoléfine, de préférence de polypropylène, pouvant être revêtue sur l'un ou les deux côtés avec une matière thermoplastique, en particulier de la polyoléfine, où la toile est tubulaire sans couture ou plate mélangée pour former un tube, et où au moins une extrémité du sac a la forme d'une surface de fond de préférence rectangulaire formée en pliant les extrémités de la toile, caractérisé en ce qu'au moins une extrémité du sac, en particulier une surface de fond, est collée - au moyen d'une couche intermédiaire (3b, 4b; 13) faite de matière thermoplastique, particulièrement de la polyoléfine, de préférence du polypropylène - sous l'action de la chaleur à une feuille de couverture (3; 6) en toile composée de bandelettes polymères à étirement monoaxial, spécialement fait de polyoléfine, de préférence de polypropylène, et en ce que moins de 30 % de l'épaisseur de la matière des bandelettes de toile de la surface de fond et de la feuille de couverture comporte des molécules désorientés en raison à la chaleur, alors que pour le reste de la superticie de la matière les molécules sont orientées.

2. Un sac selon la revendication 1, caractérisé en ce que les parties de la toile (4,4',5,5') pliées pour constituer une extrémité du sac, en particulier une surface de fond, ne chevauchent pas ou ne chevauchent pas considérablement les unes sur les autres et en ce qu'une feuille de couverture distincte (3) est prévue pour sceller le fond.

3. Un sac selon la revendication 1, caractérisé en ce que l'extrémité du sac, particulièrement la surface du fond, et la feuille de couverture sont formés de surfaces de chevauchement (6,6',7,7') lorsque la toile du sac est pliée.

4. Un sac selon l'une des revendications 1 à 3, caractérisé en ce qu'une couche (13) séparée faite de matière plastique fondue, particulièrement de la polyoléfine, de préférence de la polypropylène, est étalée comme couche intermédiaire entre l'extrémité du sac, en particulier la surface de fond, et la feuille de couverture.

5. Un sac selon l'une des revendications 1 à 3, caractérisé en ce que, dans le cas de toile de bandelettes revêtue d'un ou des deux côtés, ce revêtement (3b, 4b) sert de couche intermédiaire entre l'extrémité du sac ou surface de fond et la feuille de couverture.

6. Un sac selon l'une des revendications précédentes, caractérisé en ce qu'un copolymère d'éthylène et de vinyle acétate est mélangé avec le revêtement (3b, 4b) de la toile de bandelettes et/ou de la couche intermédiaire (13) faite de matière thermoplastique.

7. Un sac selon l'une des revendications précédentes, caractérisé en ce qu'il est prévu, au moins dans un côté d'une surface d'extrémité formée par les volets de toile (4,4',5,5') dans un endroit proche, en particulier à l'intérieur de la partie commune du bord de pliage (21,22) entre un volet de toile longitudinal (4,5) et à côté étroit (4',5'), au moins un point adhésif ou surface adhésive (20,20') faite d'un agent de collage à froid, du adhésif de type fondu à chaud ou une matière thermoplastique, particulièrement de la polyoléfine, ayant un point de fusion inférieur à celui de la matière dont est faite la toile ou la couche intermédiaire.

8. Un sac selon l'une des revendications précédentes, caractérisé en ce qu'au moins sur un côté d'une surface d'extrémité formée par les volets de toile (4,4',5,5') au moins l'un des volets de toile longitudinaux (4,5) dispose au moins d'un orifice (19,19') dans l'endroit qui, en position pliée, chevauche sur un volet de toile du côté étroit (4',5').

9. Un sac selon l'une des revendications précédentes, caractérisé en ce que les volets de toile longitudinaux (4,5) et à côté étroit (4',5') formant une surface d'extrémité du sac sont au moins partiellement soudés au niveau des endroits où ils se chevauchent les uns les autres.

10. Un sac selon l'une des revendications précédentes, caractérisé en ce que dans les endroits des surface d'extrémité dans lesquelles les poches sont formées par plage, toutes les couches de toi le superposées sont collées les unes aux autres par une soudure ou une zone de soudage.

11. Un sac selon l'une des revendications 1 à 10, caractérisé en ce que, entre l'extrémité du sac ou surface de fond, et la feuille de couverture il est prévu en plus au minimum une valve (2) à travers laquelle le sac peut être rempli et qui, lorsque le sac est plein, peut être fermée automatiquement par la pression du matériel de remplissage.

12. Un sac selon la revendication 11, caractérisé en ce qu'il est prévue au moins un orifice (18,18') dans au moins un volet de toile longitudinal (4,5) impliqué dans la formation d'une surface d'extrémité du sac, dans la zone située entre le rebord interne (5'') du volet de toile du côté étroit (5') et le rebord interne (2') de la valve (2) disposée entre les volets du côté étroit (5') et longitudinal (4,5).

13. Un sac selon l'une des revendications 1 à 12, caractérisé en ce que la toile de bandelettes est perforée.

14. Un procédé pour le soudage d'une feuille de couverture sur une surface d'extrémité, en particulier la surface du fond, d'un sac, en particulier selon l'une des revendications 1 à 11, la matière du sac consistent en des toiles faites de bandelettes de polymère à étirement monoaxial, en particulier de la polyoléfine, de préférence du polypropylène, en particulier ayant une épaisseur de 20 à 80 µm, et la feuille de couverture consistent en des membranes ou des toiles faites de bandelettes de polymère à étirement monoaxial, en particulier de la polyoléfine, de préférence du polypropylène, caractérisé en ce qu'une couche intermédiaire faite de polymère fondu, plus particulièrement de la polyoléfine, de préférence du polypropylène, ayant préférablement une épaisseur de 5-60 µm, est introduite particulièrement à une température de 150-380°C entre la surface d'extrémité et la feuille de couverture, en ce que la surface d'extrémité et la feuille de couverture sont ensuite pressées l'une contre l'autre, et en ce que la surface d'extrémité, la couche intermédiaire et la feuille de couverture sont refroidies à la température ambiante des faces extérieures de la surface d'extrémité et de la feuille de couverture, de sorte que moins de 30 % de l'épaisseur de la matière des bandelettes de toile de la surface de fond ou de l'épaisseur de la matière de la feuille de couverture comporte des molécules désorientés en raison à la chaleur, alors que pour le reste de la superficie de la matière les molécules sont orientées.

15. Un procédé pour le soudage d'une feuille de couverture sur une surface d'extrémité, en particulier la surface de fond, d'un sac, en particulier selon l'une des revendications 1 à 11, la matière du sac consistent en des toi les faites de bandelettes de polymère à étirement monoaxial, en particulier de la polyoléfine, de préférence du polypropylène, en particulier ayant une épaisseur de 20 à 80 µm, et la feuille de couverture consistent en des membranes ou des toiles faites de bandelettes de polymère à étirement monoaxial, en particulier de la polyoléfine, de préférence du polypropylène, au moins une toile ou la membrane en faite étant revêtue d'une couche de matière thermoplastique, en particulier ayant une épaisseur de 5-60 µm, tournée vers l'autre toile ou la membrane pendant le procédé de soudage, caractérisé en ce que le revêtement ou les revêtements est/sont réchauffé(s) de l'intérieur jusqu'au ramollissement, en particulier à une temperature de 150-380°C, en ce que la surface d'extrémité et la feuille de couverture sont ensuite pressées l'une contre l'autre, et en ce que la surface d'extrémité, le revêtement ou les revêtements et la feuille de couverture sont refroidies à la température ambiante des faces extérieures de la surface d'extrémité et de la feuille de couverture, de sorte que moins de 30 % de l'épaisseur de la matière des bandelettes de toile de la surface de fond ou de l'épaisseur de la matière de la feuille de couverture comporte des molécules désorientés en raison à la chaleur, alors que pour le reste de la superficie de la matière les molécules sont orientées.

16. Un procédé selon la revendication 14 ou 15, caractérisé en ce que, pour les besoins du soudage d'une feuille de couverture sur une surface d'extrémité, en particulier une surface de fond, d'un sac, les étapes de refroidissement et de pression de la surface d'extrémité ou de fond et de la feuille de couverture sont effectuées simultanément au moyen d'au moins un élément de pression refroidi, en particulier une paire de rouleaux (17, 17).

17. Un procédé selon la revendication 14, caractérisé en ce que, pour le soudage d'une feuille de couverture sur une surface d'extrémité, en particulier une surface de fond, d'un sac, une matière plastique fondue, en particulier de la polyoléfine, de préférence du polypropylène, est introduite à travers d'une filière à fente large ou à extrusion de fibre (16).

18. Un procédé selon la revendication 14 ou 15, caractérisé en ce que, pour le soudage d'une feuille de couverture sur une surface d'extrémité, en particulier de fond, d'un sac, la surface d'extrémité ou de fond et la feuille de couverture sont chauffées et pressées l'une contre l'autre au moyen au moins d'un rouleau ou une plaque chauffés ayant une surface en relief sous forme de lignes ou de pointes.

19. Un procédé selon la revendication 14 ou 15, caractérisé en ce que le soudage d'une feuille de couverture sur une surface d'extrémité, en particulier une surface de fond, d'un sac est effectué par soudage par friction.

20. Un procédé selon l'une des revendications 14 à 19, caractérisé en ce qu'un copolymère d'éthylene et de vinyle acétate est mélangé avec le revêtement (3b, 4b) de la toile de bandes et/ou avec la couche intermédiaire (13) faite de matière thermoplastique.

21. Un procédé selon l'une des revendications 14 à 20, caractérisé en ce qu'au moins un orifice (19,19') est formé dans au moins un volet de toile longitudinal (4,5) dans la région qui, en position pliée, chevauche sur un volet de toile d'un côté étroit (4',5') avant l'étape d'introduction de polymère fondu entre la surface d'extrémité et la feuille de couverture.

22. Un procédé selon l'une des revendications 14 à 21, caractérisé en ce qu'au moins un point adhésif ou zone adhésive (20,20') d'un agent de collage à froid, un adhésif de type fondu à chaud ou une matière thermoplastique, particulièrement de la polyoléfine, ayant un point de fusion inférieur à celui de la matière dont est faite la toile ou la couche intermédiaire, est appliqué particulièrement avant le plage des volets (4,4',5,5') pour former une surface d'extrémité du sac et au moins d'une côté dans une superficie proche ou en particulier à l'intérieur de la partie commune du rebord pliant (21,22), entre les volets longitudinal (4,5) et de côté étroit (4',5') et en ce que, après plage des volets dans une étape ultérieure, la matière adhésive (20,20') est collée aux volets longitudinal (4,5) ainsi que du côté étroit (4',5') à travers l'application de chaleur et/ou de pression.

23. Un procédé selon l'une des revendications 14 à 22, caractérisé en ce que de l'air chaud est soufflé vers l'intérieur entre les zones se chevauchant les unes sur les autres des volets de toile longitudinal (4,5) et du côté étroit (4',5') d'une surface d'extrémité du sac, et en ce que les volets sont enfoncés les uns contre les autres, les collant ainsi les uns aux autres.

24. Un procédé selon l'une des revendications 14 à 23, caractérisé en ce que les volets des toiles disposés longitudinalement (4,5) et sur le côté étroit (4',5') et ceux formant une poche en étant pliés sont soudés les uns aux autres en enfoncant une point chauffée ou une plaque chauffée de l'extérieur de la surface d'extrémité du sac contre les dits volets.

25. Un procédé selon l'une des revendications 14 à 24, caractérisé en ce qu'avant l'étape d'introduction de polymère fondu entre la surface d'extrémité et la feuille de couverture il est formé au moins un orifice (18,18') dans au moins un volet de toile longitudinal (4,5) impliqué dans la formation d'une surface d'extrémité du sac dans un endroit définie par le rebord interne (5'') de volet du côté étroit de la toile (5') et le rebord interne (2') de la valve disposé entre les volets du côté étroit (5') et longitudinal (4,5).
